Europäisches Patentamt

**European Patent Office**

Office européen des brevets

(11) Publication number: **0 129 402**

**A1**

(12) # EUROPEAN PATENT APPLICATION

(21) Application number: **84303993.4**

(22) Date of filing: **13.06.84**

(51) Int. Cl.³: **B 23 K 28/00**

(30) Priority: **15.06.83 GB 8316299**

(43) Date of publication of application:
**27.12.84 Bulletin 84/52**

(84) Designated Contracting States:
**DE FR IT NL SE**

(71) Applicant: **NATIONAL RESEARCH DEVELOPMENT CORPORATION**
**101 Newington Causeway**
**London SE1 6BU(GB)**

(72) Inventor: **Singer, Alfred Richard Eric**
**151 Derwen Fawr Road**
**Swansea West Glamorgan Wales(GB)**

(74) Representative: **Neville, Peter Warwick**
**Patent Department National Research Development**
**Corporation 101 Newington Causeway**
**London SE1 6BU(GB)**

(54) Spray welding of metals.

(57) A butt weld is made between components having scarves. Three work stations AB, CD and EF advance from right to left, all in a non-oxidising atmosphere. AB, a plasma scarf melting step, precedes and is overlapped by CD, a spray deposition step, which applied a molten spray of filler metal to form the weld. THe step CD precedes and is overlapped by EF, a peening step, which consolidates the weld as it freezes. The peening EF does not overlap the scarf melting AB.

Fig.3

125661

## SPRAY WELDING OF METALS

This invention relates to welding metals using a spray technique. Fusion butt welding of metals is an important operation in industry. In the case of thin strip it is sometimes possible to make a fusion butt weld without any addition of filler metals, but in the majority of cases, certainly with thick strip or plate, it is essential to add a filler metal. Scarves are formed on the edges of the strip or plate to be welded, and are preheated. Filler metal, generally of the same or similar chemical composition (and melting point) to that of the strip or plate, is supplied (usually in the form of rod, occasionally in the form of powder) and melted under a flux cover or gas shroud to fill the gap between the preheated scarves.

Many types of heating of the weld area are possible and often describe the type of welding, for example arc, gas, MIG (= metal inert gas), TIG (tungsten inert gas), submerged arc, electron beam and laser welding. In all these cases the resulting weld is a small casting which shrinks as it solidifies and also as it cools to room temperature. Therefore welds are frequently subject to high internal stresses, sometimes leading to crack formation in or at the edge of the weld. The shrinkage stresses can also lead to distortion of the original strip or plate (the 'base metal'). Moreover the weld filler metal has the structure of a casting, suffers from segregation and often contains pores and inclusions e.g. flux or slag.

The present invention is a process for welding metals which comprises locally heating the area of the metal surfaces to be welded to above their solidus temperature (whereby a molten layer or partially molten layer exists on the surfaces while the bulk of the metal to be welded is relatively cold), and applying filler metal in a non-oxidising atmosphere onto the heated surfaces, characterised in that the filler metal is in the form of a spray of molten particles; the process preferably further comprises simultaneously (i.e. while it is still hot-workable) peening the applied filler metal to consolidate it. Thus preferably the peening shot passes through at least part of the spray in order to hot work the layer of applied filler metal laid down in that pass throughout its depth. More than one pass can be made if required. By a non-oxidising atmosphere, we mean either of a neutral and a reducing atmosphere.

The filler metal usually has a chemical composition and melting point comparable with those of the metals being welded, in conformity with the accepted definition of welding.

In this way, using the preferred process, welds may be made with controlled internal stress, with a hot-worked filler metal structure and without segregation or porosity. This represents a major break with tradition because the filler metal is added in the form of a spray of molten metal droplets rather than in the form of solid rod or powder and (according to a preferred feature) the filler metal is hot worked incrementally (layer by layer) as it is applied.

A wide range of weld configurations can be used, including butt and fillet welds.

The means for heating the surfaces to be welded (the scarves of which are preferably prepared in a similar way to conventional welding) may be the same as that for melting the filler metal particles forming the spray or it may be different and independent. For example a single arc plasma torch may be used both for heating the scarves and for supplying molten filler metal particles derived from a powder feed. Alternatively, one plasma torch may be used for heating the scarves and one or more others for supplying the molten filler metal particles.

Entirely different heat sources may also be used with good effect. For instance the scarves may be heated by a laser beam and molten filler metal particles applied by means of an arc spray pistol consuming filler metal in the form of wire. Filler metal particles may also be generated by inert-gas-atomising a melt of filler metal. Thermal spray guns utilising, for instance, an oxy-acetylene flame may also be used for heating the scarves and for supplying the spray of molten filler metal but in this case, care must be exercised to avoid generating an oxidising atmosphere around the molten filler metal particles which could lead to oxide inclusions in the weld. Direct arc heating ("TIG"), transferred arc and surface induction heating of the scarves are also possible but may lead to difficulty in controlling the thickness of the molten layer on the surface.

Where it is desirable to ensure very low porosity, a worked structure or controlled or low internal stress, peening may be used. In this case, the peening is preferably by rounded hard particles, usually being spherical shot or steel balls of diameter from 1 mm to 10 mm. The shot are preferably used cold and should be at least ten times larger in diameter than the mean diameter of the molten filler metal spray particles to avoid capture and inclusion in the filler metal deposit. In practice it is found that shot having diameters from 2 mm to 5 mm are the most useful because they have sufficient mass to plastically deform the filler metal deposits when bombarding it yet are not so large that they cannot enter into the shallow area (usually a V-shaped recess) defined by the scarves in a butt weld or the recesses of a fillet weld where the filler metal is being deposited. The spray particles may have an average size (diameter) of from 40 to 200 micrometres. The shot should be chosen not to fracture during impact, otherwise some of the resulting fragments might be incorporated into the weld. A denser shot material will plastically deform the filler metal deposit more effectively; thus glass shot is less desirable than steel or tungsten. Peening can be carried out either with shot all of the same size or alternatively an assortment of sizes, within the considerations mentioned above. Shot is preferably applied at a rate (mass/time) of from 10 to 500 times the rate of applying the filler metal.

The shot plastically deform the deposit and bounce off, usually losing up to 80% of their energy in the process, and preferably are collected and returned for re-use. The shot can be accelerated to their peening velocity, usually between 5 and 50 $m^{-1}$, by any suitable means. A particularly useful and economic procedure is to use a centrifugal shot slinger, a standard item of equipment.

This is preferred over pneumatic acceleration, as it avoids generating a high velocity gas stream that would blow the filler metal spray particles away from the weld area. Also, it causes the shot to spin rapidly, whereby spray particles are unlikely to adhere to the shot. Typically a shot might hot plastically deform a layer say 40 splats deep.

The shot have a cooling effect on the weld deposit because (under usual conditions) heat extraction by conduction to the cold peening shot is greater than the added heat derived from the kinetic energy of the shot. Cooling can be increased by using a larger mass of peening shot per unit mass of deposit, smaller sizes and lower velocities. Freezing the shot before use has an additional small effect. There are, however, several constraints, for instance it is not possible to reduce both size and velocity to too great an extent otherwise consolidation and plastic deformation of the filler metal are diminished.

The parts of the process (i.e. (i) melting the surface of the scarves, (ii) adding filler metal in the form of a spray of liquid atomised particles and, where required, (iii) peening the deposit to plastically deform and consolidate it) can be carried out simultaneously at one location or work station, which location travels along the length of the weld. In this case the whole process may be completed in one single operation for instance by means of a plasma torch: the plasma flame heats the scarves of the weld and the spray of molten filler metal particles is provided by feeding powdered filler metal into the plasma. Peening may be carried out by directing high velocity shot through the spray on to the area of the deposit. In such a case parts (ii) and (iii) of the process may follow generally the procedure outlined in UK Patent Specification 1605035. Such a simultaneous three part operation may be carried out continuously or semi-continuously as it travels along the line of the weld.

It is usual for the scarves of butt welds in medium and thick materials to be prepared so that they are tapered and allowed to meet, or nearly meet, at the bottom. This is likewise a useful geometric form for spray welding according to the present invention. Any gap at the bottom of the scarves should be as small as possible and appreciably less than the diamter of the peening shot used.

In practice, there is usually some advantage in locating the scarf melting (i) to precede the filler metal addition (ii) and (where present) the peening (iii). For example if a weld is being made continuously it is often advantageous to allow the surface of the scarves to be melted before adding filler metal or peening because filler metal will not adhere to the scarves until they are molten or nearly molten and the peening shot will then (undesirably) merely indent and cool the scarves.

Advantageously, part (i) slightly precedes (ii), or (ii) slightly precedes (iii), or both, but preferably preserving an overlap of (i) with (ii) and of (ii) with (iii), but (i) and (iii) preferably not overlapping.

The invention will now be described by way of example with reference to the accompanying drawings, in which:-

Figure 1 illustrates an example of a way in which spray butt welding can be carried out according to the invention in a very simple but effective manner, using a single plasma torch, and

Figures 2 and 3 illustrate an example of a process according to the invention.

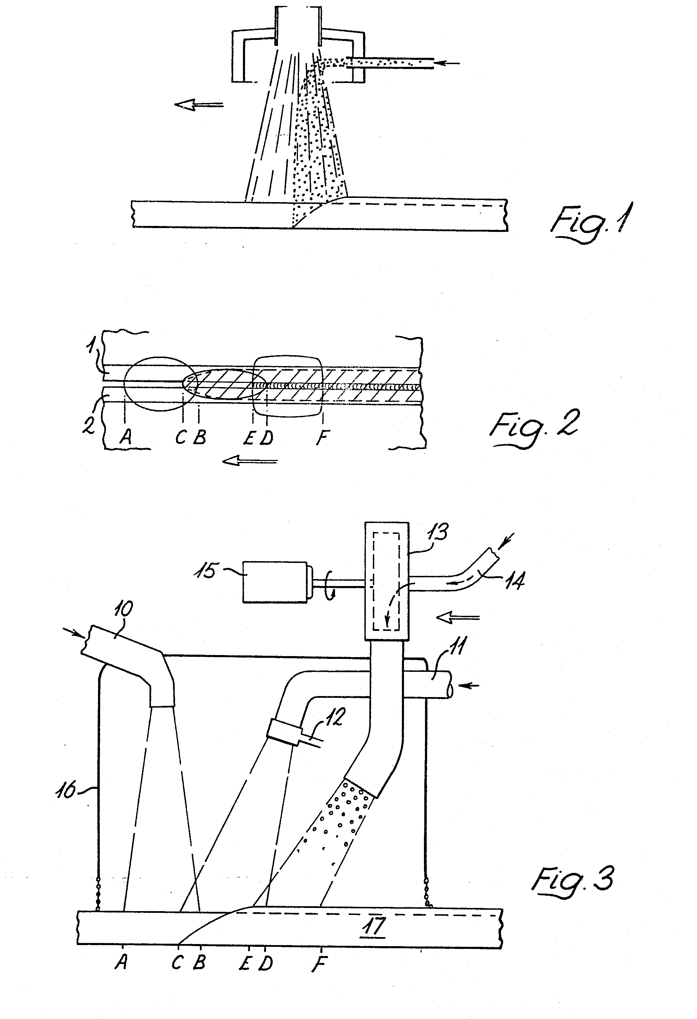

Referring to Figure 1, a plasma torch moves (to the left as drawn) along a weld. One metal piece to be welded is behind the plane of the paper and the other is in front. Filler metal powder entrained in carrier gas is introduced into a shroud of the plasma torch at a rather low gas pressure, whereby the powder stays in the trailing part of the plasma. Thus, as the torch advances along the weld, the weld first experiences a preheating scarf-melting step, followed immediately by a molten particles deposition (weld filling) step. In other words, the powder is injected at the trailing side of the plasma torch at a low pressure of the carrier gas so that the powder particles of filler metal penetrate only partly through the plasma stream. In this way it can be arranged for the forward part of the plasma to be free from powder and used for preheating and surface melting the scarves while the rear part of the plasma is loaded with molten filler metal particles which will form the weld. In the case illustrated there is no peening action although this could be added if required.

When using a single plasma for both preheating and filler addition, the injection nozzle should be angled to allow for the swirl which the plasma jet is likely to embody.

Figure 2 shows a butt weld in plan view, being made according to the invention. Weld scarves 1 and 2 are held in position while, together, three work stations advance from right to left (as drawn), leaving behind a completed and consolidated weld 3. The weld scarves are preheated to the point of superficial melting over the area AB, which at its trailing end overlaps with a filler metal plasma spray area CD, which itself is only just in advance of a peening area EF. The onset E of the peening is slightly behind the cessation B of the scarf melting; however, though not preferred, AB could be allowed slightly to overlap EF.

Figure 3 shows, in elevation, apparatus making the weld of Figure 2. The superficial melting AB is performed by a plasma torch 10, the filler metal spray CD by a plasma torch 11 with filler metal powder entrainment at 12 (the same as the metal being welded) and the peening EF by a motor-driven centrifugal shot slinger 13 having a shot feed chute 14. Shot is accelerated centrifugally along vertical blades rotated about a horizontal axis by a motor 15. The plane of rotation of the blades, as drawn, is normal to the paper but may advantageously instead be in the plane of the paper.

The whole is enclosed by a shroud 16 for protection against oxidising gas, with a chain-mail skirt for retaining the shot. The build-up of weld metal is shown schematically as 17.

Thus, it will be seen that heating of the scarves is slightly in advance of the filler addition which in turn is slightly in advance of the shot peening part. It is of course important that each part is only slightly displaced from the remainder because the molten film must be retained on the scarves until the filler metal is added in order to achieve a high quality weld. Similarly it is necessary to ensure that shot peening starts while the filler metal is still in the hot working range and still sufficiently thinly deposited that the first impact of shot will plastically deform the whole thickness of the filler metal deposited up to that instant and continues at least until deposition ceases, if a full density worked weld metal structure is to be obtained, which is worked as it is deposited, i.e. thoroughly throughout its depth (i.e. incrementally). Separation of the three parts from one another by too long a period of time i.e. say several seconds, may lead to loss of adhesion of the filler metal to the scarves or lack of consolidation of the filler weld metal because it is peened at too low a temperature. Also, peening would not be incremental.

An important part of the invention concerns the use of inert or reducing atmospheres. In most conventional arc or gas welding (though not in MIG or TIG), a flux is used to aid in removing oxide films on the scarves and the filler metal. In the invention it is not possible to use a flux because of the possibility of entrapment and incorporation in the weld. Consequently it is necessary to reduce or disperse the oxide films on the scarves and protect the filler metal particles from oxidation. This can be done effectively either by conducting the invention in a shroud or atmosphere of reducing or inert gas. This procedure is entirely effective even with oxide films which are hard or impossible to reduce. The reason is that when the surfaces of the scarves are melted in a reducing or neutral atmosphere any irreducible oxide, e.g. $Cr_2O_3$ or $TiO_2$ or $Al_2O_3$ remains as a very thin film on the surface of the molten layer. This thin film is broken up and penetrated by the high velocity liquid filler metal particles directed at the scarves to produce a fully integrated mass. The spray of molten filler metal particles is of course protected from oxidation by the neutral or reducing atmosphere.

The filler metal in the form of a spray of molten particles must be fully molten or mostly molten i.e. on average not more than 50% solid when it reaches the scarves or the prior deposited filler metal. This is necessary for the particles to splat and avoid serious porosity. In any spray of particles because of its random nature some particles will necessarily be smaller than others and some particles will arrive at the substrate at a lower temperature than others, a proportion even arriving solid. Provided this proportion is small it is not detrimental to the weld. In this specification, 'temperature' and 'size' refer to average temperature and average size for each spray under consideration. The spray density (i.e. the rate of deposition of spray particles) is preferably maintained at a fairly high level in order to ensure that the prior splats are still at least superficially molten when the next particles arrive. This ensures low porosity and leads to a cellular fine grain structure of the weld metal. The principles involved are fully set out in Metals Technology, February 1983, Vol 10 page 61.

The action of the peening shot when it is used is to consolidate and hot work the weld deposit. A feature of the process in these examples is that this occurs incrementally leading to a relatively uniform structure through the weld. In any one pass, as each layer of filler metal particles is added to the weld it is consolidated and worked by the impacting balls. More layers are added by that spray as it passes along the weld and immediately consolidated and so on. As a consequence at the end of a pass the whole weld is fully consolidated and worked by virtue of this incremental procedure. Thus it is possible to complete a weld between heavy metal plates in a single pass as compared with the multiple passes necessary in conventional arc welding. Such a weld will then be characterised by being fully consolidated and fully worked throughout its thickness. Multiple passes can be used if desirable.

Because of the need for close control of the spray welding operation involving peening and the need to maintain a shroud to retain the atmosphere and prevent the high velocity shot from escaping, it is most conveniently used for machine welding. Manual operation is also possible, and there is one important area where it is particularly well suited. This concerns the rectification of defects in casings or wrought structures such as blow holes or holes inadvertently drilled in the wrong place. In such cases filling with weld material by conventional arc welding is sometimes used for rectification but causes major internal stresses because of solidification shrinkage and thermal contraction.

In such cases rectification using the invention is more effective because, where peening is incorporated, the deposit laid down has low internal stress, is fully dense and is hot worked.

A suitable procedure would be to use one plasma torch fitted with powder feed. The area for repair would be preheated by the hot plasma for a few seconds to melt a very thin surface film or bring it near to melting point. Filler metal in the form of powder would then be fed into the plasma torch to form the deposit. After a further shot interval, say one second, peening would commence. Deposition and peening would continue simultaneously until the cavity was filled, or slightly more than filled. The plasma torch would then be extinguished and shortly afterwards, say one second, peening would stop. The top surface could then be ground back to the required level, if required.

In common with conventional fusion welding most of the cooling of the molten particles of added filler metal to cause solidification of the weld is brought about by conduction of heat to the cooler scarves and surrounding base metal. In addition, an appreciable amount of heat is removed by the shot, and by convection and by radiation.

The process may find use for the butt welding of medium and thick strip and plate and for the formation of T joints, fillet joints (where undercutting is usually greatly reduced) and lap joints. Spot welding, seam welding and projection welding are areas in which the invention has limited application. Where a peening operation is not used the filler metal laid down at high spray density will be fine grained equiaxed or cellular in structure. Small amounts of porosity may occur throughout the weld although this will generally not be more than 3% if high spray densities are used.

When peening is used the fact that the filler metal is hot worked and consolidated together with the capability of controlling internal stress enables welds to be made that have improved overall strength and ductility, together with higher fatigue and creep strength when compared with conventional fusion welds.

The angle of incidence of the peening shot to the plane of the deposit is a significant factor. In general terms it should be as near to the normal as possible bearing in mind the advisability of avoiding as far as possible shot rebounding directly into the atomising nozzle. Similarly the angle of incidence of the spray should be as near normal as practicable to avoid the well known shadowing effects occurring during spray deposition. Good results are obtained when the angles of incidence of the shot and the spray to the normal of the plane of the deposit are both not greater than $30^{\circ}$.

Welding in space, i.e. under conditions of vacuum, is also possible. If a plasma torch is used the hot plasma flame will be appreciably longer because the gas fed to the torch will be effectively operating under low pressure. This is advantageous for most welding work. Oxidation of the hot molten filler metal particles will not occur but if peening is used a shroud must be provided in order to collect the peening shot and prevent them bouncing off in all directions. Under zero gravity conditions the peening shot, if made of steel, can be collected by a magnetic surface and then scraped off for re-supplying to the shot slinger.

CLAIMS

1. A process for welding metals, which comprises locally heating the area of the metal surfaces to be welded to above their solidus temperature (whereby a molten layer or partially molten layer exists on the surfaces while the bulk of the metal to be welded is relatively cold), and applying filler metal in a non-oxidising atmosphere onto the heated surfaces, characterised in that the filler metal is in the form of a spray of molten particles.

2. A process according to Claim 1, further comprising peening the applied filler metal while it is still hot-workable.

3. A process according to Claim 2, wherein the peening hot-works the applied filler metal laid down in that pass throughout its depth.

4. A process according to Claim 2 or 3, wherein the peening is by rounded hard particles.

5. A process according to Claim 4, wherein the peening is by spherical shot or steel balls of diameter from 1 mm to 10 mm, preferably from 2 mm to 5 mm.

6. A process according to Claim 5, wherein the shot or balls are used cold and are at least 10 times larger in diameter than the mean diameter of the molten filler-metal spray particles.

7. A process according to any of Claims 2 to 6, wherein peening particles are applied at a rate (mass/time) of from 10 to 500 times the rate of applying the filler metal.

8. A process according to any preceding claim, wherein the filler metal spray particles have an average size of from 40 to 200 micrometres.

9. A process according to any preceding claim, where the steps (i) melting the surface of the scarves, (ii) adding filler metal in the form of a spray of molten particles and, where present, (iii) peening are carried out simultaneously at one location or work station, which location travels along the weld.

10. A process according to Claims 1 to 8, wherein the step (i) melting the surface of the scarves precedes but is overlapped by the step (ii) adding filler metal in the form of a spray of molten particles.

11. A process according to Claims 2 to 7, or Claims 8 to 10 when dependent on Claim 2, wherein the step (ii) adding filler metal in the form of a spray of molten particles precedes but is overlapped by step (iii) peening.

12. A process according to Claim 11, wherein the steps (i) and (iii) do not overlap.

13. A process according to any preceding claim, wherein more than one pass is made.

0129402

1/1

Fig.1

Fig.2

Fig.3

European Patent
Office

**EUROPEAN SEARCH REPORT**

EP 84303993.4

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| X | DE - A - 2 062 036 (CENTRE DE RECHERCHES DE PONT-A-MOUSSON) <br> * Fig. 1 * <br> -- | 1 | B 23 K 28/00 |
| D,A | US- A - 4 224 356 (SINGER) <br> * Fig. 2,4 * <br> ---- | 2-8 | |

| TECHNICAL FIELDS SEARCHED (Int. Cl. ³) |
|---|
| B 23 K 28/00 <br> B 23 K 31/00 <br> B 23 K 33/00 |

The present search report has been drawn up for all claims

| Place of search <br> VIENNA | Date of completion of the search <br> 11-09-1984 | Examiner <br> BENCZE |
|---|---|---|